# EUROPÄISCHE PATENTSCHRIFT

(11) **EP 1 510 034 B1**
(45) Veröffentlichungstag und Bekanntmachung des Hinweises auf die Patenterteilung: **06.04.2011**
(21) Anmeldenummer: 03763702.2
(22) Anmeldetag: 03.07.2003
(51) Int. Cl.: H04L 9/00, H04L 9/06

(54) **Vorrichtung und Verfahren zum Durchführen eines Kryptoalgorithmus**
Device and method for performing a cryptoalgorithm
Dispositif et procédé pour exécuter un algorithme cryptographique

(30) Priorität: 10.07.2002 DE 10231195
(43) Veröffentlichungstag der Anmeldung: 02.03.2005
(73) Patentinhaber: Infineon Technologies AG, 85579 Neubiberg (DE)
(72) Erfinder: RUEPING, Stefan, 84435 Lengdorf (DE)
(74) Vertreter: Zinkler, Franz
(86) Internationale Anmeldenummer: PCT/EP2003/007135
(87) Internationale Veröffentlichungsnummer: WO 2004/008682

(56) Entgegenhaltungen:
- US-A- 6 028 939
- US-A1- 2002 078 348
- PHILLIPS B J ET AL: "Implementing 1,024-bit RSA exponentiation on a 32-bit processor core" IEEE INTERNATIONAL CONFERENCE ON APPLICATION-SPECIFIC SYSTEMS, ARCHITECTURES, AND PROCESSORS (ASAP'00) , 10. Juli 2000 (2000-07-10), Seiten 127-137, XP010507743 Boston, Massachusetts

## Beschreibung

Die vorliegende Erfindung bezieht sich auf kryptographische Algorithmen und insbesondere auf Konzepte zum Abarbeiten von kryptographischen Algorithmen auf effiziente und ökonomische Art und Weise.

In der Technik ist eine Vielzahl von kryptographischen Algorithmen bekannt, wobei bestimmte kryptographische Algorithmen, wie z.B. der DES-Algorithmus oder der AES-Algorithmus nach Rijndael, Runden-basiert sind. Ein kryptographischer- Algorithmus, der in Runden arbeitet, führt bestimmte Operationen auf zu verschlüsselnde Bits in Runden durch, wobei die Operationen einer Runde typischerweise identisch sind, wobei jedoch in jeder Runde ein anderer Rundenschlüssel verwendet wird. Allgemein gesagt umfaßt ein solcher kryptographischer Algorithmus eine Gruppe von Operationen, wobei die Operationen typischerweise arithmetische und/oder logische Operationen sowie Rotations-Operationen und/oder Permutations-Operationen und/oder Substitutions-Operationen umfassen. Darüber hinaus benötigt ein solcher Runden-basierter Algorithmus neben Mitteln zur Durchführung der einzelnen Operationen auch Mittel zur Ablaufsteuerung.

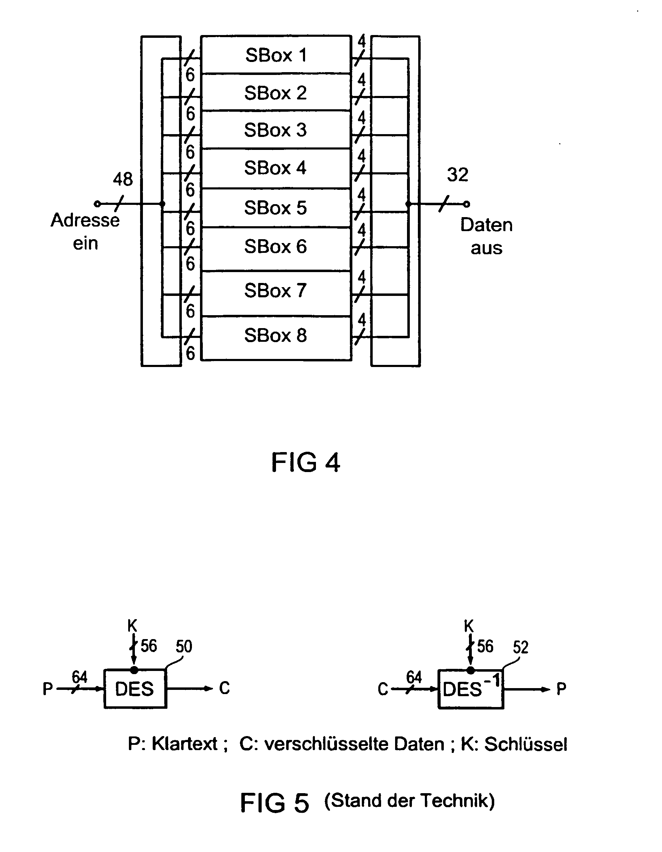

Dies wird nachfolgend anhand der Figuren 5 bis 7, die sich auf den DES-Algorithmus beziehen, dargestellt. Insbesondere wird darauf hingewiesen, daß sich die Fig. 5 bis 7 auch auf den Double-DES-Algorithmus (2DES) oder den Triple-DES-Algorithmus (3DES) beziehen, die in einer zwei- bzw. dreifachen Ausführung des DES-Algorithmus bestehen.

Fig. 5 zeigt eine Vorrichtung 50 zum Ausführen des DES-Algorithmus in Verschlüsselungs-Richtung sowie eine Vorrichtung 52 zum Ausführen des DES-Algorithmus in Entschlüsselungsrichtung (DES⁻¹).

In die DES-Vorrichtung 50 werden Klartextdaten P in Blöcken von 64 Bits eingespeist. Die Vorrichtung 50 erhält ferner einen Schlüssel K, der 56 Bits umfaßt. Ausgangsseitig liefert die DES-Vorrichtung 50 verschlüsselte Daten C. Analog hierzu erhält die DES-Entschlüsselungsvorrichtung 52 einen Block verschlüsselter Daten, der 64 Bits umfaßt. Wieder ist der Schlüssel K 56 Bits breit, so daß sich am Ausgang der Vorrichtung 52 wieder 64 Bits an Klartextdaten ergeben. Es sei darauf hingewiesen, daß der DES-Algorithmus ein symmetrischer Algorithmus ist, derart, daß bei der Verschlüsselung und bei der Entschlüsselung derselbe Schlüssel K und inverse Operationen verwendet werden.

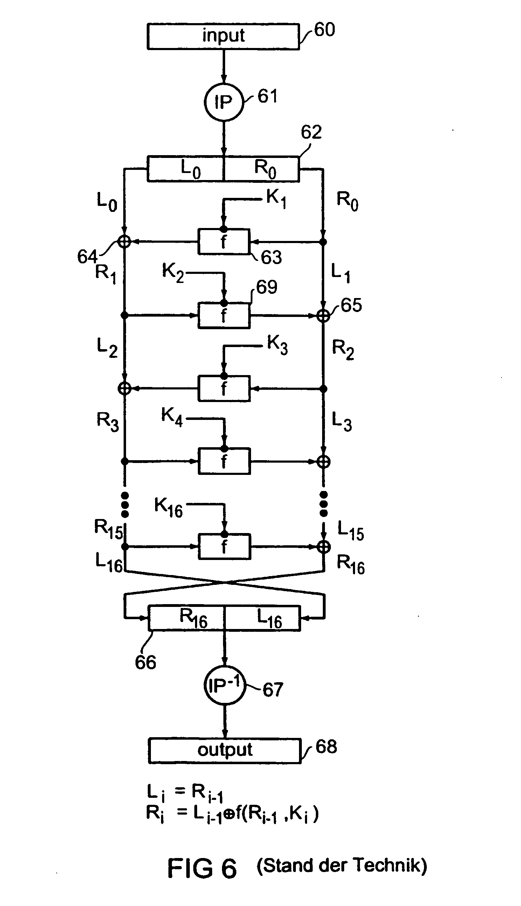

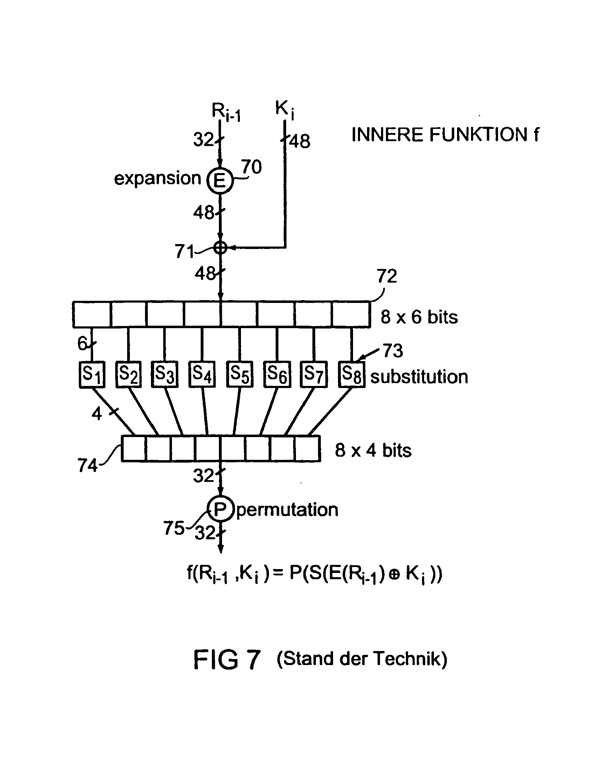

Der DES-Algorithmus ist detailliert im "Handbook of Applied Cryptography", Menezes, van Oorschot, Vanstone, CRC Press, 1996, S. 252 bis 260, detailliert beschrieben. Aus Verständnisgründen wird nachfolgend Bezug nehmend auf die Fig. 6 und 7 der prinzipielle Ablauf des DES-Algorithmus dargestellt. Zunächst werden 64 Bits Klartextdaten eingespeist (Block 60). Hierauf findet mit den 64 Bits Eingangsdaten eine Anfangspermutation (IP; IP = Initial Permutation) 61 statt. Die Ausgangsbits des Blocks 61 werden in eine linke Hälfte L₀, die die ersten 32 Bits umfaßt, sowie in eine rechte Hälfte R₀, die die zweiten 32 Bits umfaßt, aufgeteilt (62). Hierauf wird die rechte Hälfte R₀ einer Rundenfunktion 63 zugeführt, wobei die Rundenfunktion ferner einen Schlüssel K₁ für die entsprechende Anzahl der Runde, im vorliegenden Fall die erste Runde, erhält. Die Rundenfunktion 63 liefert ein Ergebnis, das mit der linken Hälfte des Blocks 62 XOR-verknüpft wird (64).

Hierauf werden die linke und die rechte Hälfte ausgetauscht, so daß die Ausgangsdaten der XOR-Verknüpfung 64 nun als rechte Hälfte R₁ für die nächste Runde behandelt werden, während die Eingangsdaten in die Funktion 63 nunmehr als linke Hälfte L₁ behandelt werden. Hierauf wird mittels einer Rundenfunktion 69 eine Verarbeitung unter Verwendung des Schlüssels für die zweite Runde K₂ durchgeführt, um das Ergebnis der Funktion 64 wieder mit L₁ einer XOR-Verknüpfung 64 zu unterziehen. Die Funktion 69 ist identisch zu der Funktion 63, jedoch abgesehen von dem Rundenschlüssel, der für die Funktion 63 der Rundenschlüssel K₁ war, und der für die Funktion 69 ein Rundenschlüssel für die zweite Runde K₂ ist. Dieses Prozedere wird, wie es aus Fig. 6 ersichtlich ist, für alle 16 Runden wiederholt, um dann in einem Block 66 wieder eine Links/Rechts-Vertauschung durchzuführen. Das Ergebnis dieser Vertauschung wird dann einer End-Permutation 67 unterzogen, die in Fig. 6 mit IP⁻¹ bezeichnet ist, um herauszustellen, daß diese Permutation die zur Permutation im Block 61 inverse Permutation ist.

Die Ausgabe des DES-Algorithmus (Block 68) entspricht dann den verschlüsselten Daten C von Fig. 5. Im Falle eines 2DES-Algorithmus werden die Ausgangsdaten im Block 68 wieder in den Block 60 eingespeist, um den DES-Algorithmus, wie er in Fig. 6 dargestellt ist, erneut zu durchlaufen.

Im Falle des 3DES-Algorithmus findet noch ein zusätzlicher, dritter Durchgang statt.

Die Rundenschlüssel K₁, K₂, K₃, K₄, ..., K₁₆ werden aus dem Eingangsschlüssel K von Fig. 5 unter Verwendung eines bestimmten Algorithmus berechnet, der in der Technik bekannt ist und 28-Bit-Rotations-Operationen sowie Bitselektionstabellen unter Verwendung einer ersten Bitselektionstabelle PC1 und einer zweiten Bitselektionstabelle PC2 umfaßt.

Fig. 7 zeigt eine detailliertere Darstellung der inneren Funktion f, die in Fig. 6 mit den Blöcken 63, 69 dargestellt ist. Zunächst findet mit den 32-Bit-Eingangsdaten Rᵢ₋₁ eine Expansions-Operation 70 statt. Das Ergebnis der Expansions-Operation 70 wird dann mit dem für diese Runde i berechneten Rundenschlüssel kᵢ XOR-verknüpft (71). Die Expansions-Operation erzeugt aus 32 Bits 48 Bits, wobei bestimmte Bits der 32 Eingangsbits doppelt verwendet werden, um die 48 Ausgangsbits zu erzeugen. Die 48 Ausgangsbits werden dann in 8 x 6 Bits eingeteilt (Block 72) und entsprechend ihrer Wertigkeit einer Bitsubstitution unter Verwendung von 8 BitSubstitutionstabellen, die in der Technik als auch als S-BOXEN bezeichnet werden, unterzogen. Die Bitsubstitutionstabellen erzeugen jeweils aus 6 Eingangsbits 4 Ausgangsbits, so daß aus den 48 Bits vor der Bitsubstitution 32 Bits werden (Block 74). Die Ausgangsdaten der Bitsubstitution 73 werden schließlich einer Permutation 75 unterzogen, um das Ergebnis des Blocks 63 bzw. des Blocks 69 in einer Runde des DES-Algorithmus zu liefern, das dann, wie es in Fig. 6 gezeigt und bereits ausgeführt worden ist, einer XOR-Verknüpfung mit der linken Hälfte (Block 64 oder Block 65) unterzogen wird.

Bezüglich der Bitsubstitution 73 sei darauf hingewiesen, daß die in dem Block 72 vorliegenden 48 Bits nicht unmittelbar verwendet werden, um die S-BOXEN zu adressieren, sondern daß aus diesen Bits unter Verwendung einer arithmetischen Verknüpfung ein Zeilenwert und ein Spaltenwert für die jeweiligen S-BOXEN berechnet werden, mit denen die S-BOXEN dann adressiert werden, um an der adressierten Stelle vorliegende 4-Bit-Daten als Antwort auf die Adressierung zu liefern.

Die Permutations- bzw. Expansions/Permutations-Vorschriften der Blöcke 61, 67, 70, 75 sowie die Bitselektionsvorschriften für die Schlüsselgenerierung in Form der Tabellen PC1 und PC2 sind in der Technik bekannt und für den DES-Algorithmus standardisiert. Dasselbe trifft für die S-BOXEN S₁, S₂, ..., S₈ zu. Auch die S-BOXEN sind für den DES-Algorithmus standardisiert, ebenso wie der gesamte in Fig. 6 dargestellte äußere Ablauf sowie die in Fig. 7 dargestellte Rundenfunktion f.

Bisher wurde zur Beschleunigung des DES-Algorithmus ein spezielles Hardware-Modul eingesetzt, das eine vollständige Implementierung des DES bzw. 3DES-Algorithmus beinhaltet, einschließlich der Schlüsselerzeugung und -speicherung, der Ablaufsteuerung sowie aller erforderlichen Operationen. Dieses Modul wurde aus Sicherheitsgründen zum großen Teil als Full-Custom-Design ausgeführt und typischerweise im Entwurf als Hard-Makro eingebunden.

Damit ergibt sich im Stand der Technik eine Hardware-Implementierung des DES-Algorithmus, die optimale schnell ist, die jedoch hinsichtlich des Entwurfs aufwendig ist und auch hinsichtlich des Chipflächenbedarfs problematisch ist.

Insbesondere muß bei Veränderungen am Design bzw. bei einer Implementierung eines neuen Multifunktions-Kryptographieprozessors das Hard-Makro manuell und aufwendig überarbeitet werden, was sowohl in der Entwurfsphase als auch in der Testphase aufwendig ist und problematisch hinsichtlich immer härteren Anforderungen an die "Time-to-Market" ist.

Darüber hinaus ist die Hard-Makro-Ausführung auch im Hinblick auf den Chipflächenbedarf nicht optimal, zumal Ablaufsteuerungen für ähnliche Kryptoalgorithmen, die auf demselben multifunktionalen Kryptochip implementiert sind, für jeden Algorithmus einzeln bereitgestellt werden, obgleich sie prinzipiell dieselben Funktionen ausführen, nämlich die Ablaufsteuerung eines Runden-basierten Kryptoalgorithmus.

Insbesondere die Begrenzung des Chipflächenbedarfs, die speziell für Sicherheits-ICs gilt, die auf Chipkarten eingesetzt werden sollen, ist eine wesentliche Einschränkung, zumal der Schaltungsdesigner neben einem schnellen DES-Prozessor selbstverständlich auch eine möglichst große Menge an Speicher wünscht, so daß eine optimale Abwägung zwischen Chipflächenbedarf für den Speicher und Chipflächenbedarf für Spezialmodule, wie z.B. das DES-Modul, getroffen werden müssen.

Andererseits ist es für bestimmte Anwendungen nicht von höchster Bedeutung, daß der Algorithmus maximal schnell abgearbeitet wird. Es wird zwar eine gewisse Schnelligkeit verlangt, in manchen Fällen jedoch nicht die maximal mögliche Schnelligkeit, die durch ein komplettes Hardware-Design des DES-Algorithmus erreicht wird.

US-A-6 028 939 (YIN JOHN), 22. Februar 2000 (2000-02-22), offenbart eine Vorrichtung und ein Verfahren zum Durchführen eines kryptographischen Prozesses, wie beispielsweise des DES-Prozesses. Die Vorrichtung umfasst einen Mikroprozessor und ein programmierbares Hardware-Element das mit dem Prozessor verbunden ist. Die Operationen des kryptographischen Verfahrens werden einerseits in Hardware-zentrierte Operationen, die effizient in Hardware durchgeführt werden können, und andererseits in Software-zentrierte Operationen aufgeteilt. Die Hardwarezentrierten Operationen werden in dem programmierbaren Hardware-Element durchgeführt.

Die Aufgabe der vorliegenden Erfindung besteht darin, ein wirtschaftliches Konzept für eine dennoch ausreichend schnelle Implementation eines Kryptoalgorithmus zu schaffen.

Diese Aufgabe wird durch eine Vorrichtung zum Ausführen eines Kryptoalgorithmus nach Patentanspruch 1 oder durch ein Verfahren zum Ausführen eines Kryptoalgorithmus nach Patentanspruch 18 gelöst.

Der vorliegenden Erfindung liegt die Erkenntnis zugrunde, daß eine wirtschaftliche und dennoch ausreichend schnelle Implementation eines Kryptoalgorithmus dadurch erreicht werden kann, daß der Kryptoalgorithmus nicht mehr allein durch eine Hardware-Schaltung ausgeführt wird, sondern durch eine zentrale Verarbeitungseinheit, welche eine Untergruppe der Operationen des Kryptoalgorithmus und die Ablaufsteuerung des Kryptoalgorithmus übernimmt, und eine Hardware-Schaltung, welche eine zweite Untergruppe der Operationen des Kryptoalgorithmus durchführt und mit der zentralen Verarbeitungseinheit über einen Datenbus verbunden ist.

Erfindungsgemäß wird die Gruppe von Operationen, aus denen ein Kryptoalgorithmus besteht, in die erste Untergruppe und die zweite Untergruppe aufgeteilt, wobei die erste Untergruppe der zentralen Verarbeitungseinheit zugewiesen wird, während die zweite Untergruppe der Hardware-Schaltung zugewiesen wird, wobei die Hardware-Schaltung fest verdrahtet ist bzw. keine Software-Programmierung aufweist, um Operationen der zweiten Untergruppe schnell ausführen zu können.

Eine bevorzugte Aufteilung der Gruppe von Operationen des Kryptoalgorithmus besteht darin, daß die erste Untergruppe arithmetische und/oder logische Operationen, wie z.B. die XOR-Verknüpfungen in einem Kryptoalgorithmus sowie Adressenberechnungen für Bitsubstitutionstabellen umfaßt, und wobei die zweite Untergruppe Rotations-Operationen, Permutations-Operationen, Expansions-Operationen und/oder Selektions/Substitutions-Operationen umfaßt.

Die Durchführung der zweiten Untergruppe von Operationen in der zentralen Verarbeitungseinheit würde in der Programmierung aufwendig sein und zu viele Verarbeitungszyklen benötigen. Daher werden diese Operationen Hardware-mäßig implementiert, und zwar durch Multiplexer, Register mit Rotationsfähigkeit oder direkt adressierbare Speicher zur Bitsubstitution, während die Operationen, die von der zentralen Verarbeitungseinheit ohnehin sehr effizient ausgeführt werden, wie z.B. arithmetische und/oder logische Operationen, auch tatsächlich von der zentralen Verarbeitungseinheit ausgeführt werden.

Ein Vorteil der vorliegenden Erfindung besteht darin, daß das erfindungsgemäße Konzept synthetisierbar ist, da lediglich bestimmte Operationen, nämlich die zweite Untergruppe von Operationen, in Hardware auszulegen sind, während die gesamte Ablaufsteuerung, die bei der Synthetisierbarkeit eher problematisch ist, per Software in die zentrale Verarbeitungseinheit (CPU) einprogrammiert werden kann.

Ein weiterer Vorteil der vorliegenden Erfindung besteht darin, daß sie eine Skalierbarkeit liefert hinsichtlich einerseits Schnelligkeit, die unzweifelhaft bei einer reinen Hardware-Implementierung am höchsten ist, und Chipflächenbedarf, der ohne Zweifel bei einer reinen softwaremäßigen Implementierung am geringsten ist.

Ein besonderer Vorteil der vorliegenden Erfindung besteht darin, daß bei einer Implementierung des erfindungsgemäßen Konzepts auf einer multifunktionalen Sicherheits-IC die zentrale Verarbeitungseinheit, die ohnehin bereits auf diesem Chip vorhanden ist, benutzt werden kann, so daß keine eigene zentrale HW-Verarbeitungseinheit in Form einer State Machine für den betrachteten Kryptoalgorithmus aufgebaut werden muß. Das erfindungsgemäße Konzept ermöglicht somit eine bessere Ausnutzung bereits bestehender Komponenten sowie eine damit einhergehende Chipflächeneinsparung.

Ein weiterer Vorteil der vorliegenden Erfindung besteht darin, daß bei einer Implementierung auf einem Sicherheits-IC die CPU des Sicherheits-IC ohnehin bereits durch bestimmte Sicherheitsmaßnahmen gegenüber externen Krypto-Analyse-Attacken abgesichert ist. Damit sind bereits die Aktivitäten der zentralen Verarbeitungseinheit bei der Ausführung des Kryptoalgorithmus ohne weiteres gegenüber Kryptoattacken geschützt, so daß lediglich noch für die Hardware-Schaltung Sicherheitsmaßnahmen vorzusehen sind, beispielsweise unter Verwendung einer redundanten Auslegung einschließlich einer inversen Ansteuerung und einer inversen Ausgabe.

Bevorzugte Ausführungsbeispiele der vorliegenden Erfindung werden nachfolgend Bezug nehmend auf die beiliegenden Zeichnungen detailliert erläutert. Es zeigen:
- Fig. 1: ein Blockschaubild einer erfindungsgemäßen Vorrich- tung zum Ausführen eines Kryptoalgorithmus;
- Fig. 2: eine bevorzugte Ausführungsform für die Hardware- Schaltung am Beispiel des DES-Algorithmus;
- Fig. 3a: eine erste Ausführungsform der Multiplexer- Einrichtung von Fig. 2;
- Fig. 3b: eine zweite Ausführungsform der Multiplexer- Einrichtung von Fig. 2;
- Fig. 4: eine bevorzugte Ausführungsform der S-BOXEN-Einheit von Fig. 2;
- Fig. 5: eine schematische Darstellung des DES-Algorithmus;
- Fig. 6: eine detailliertere Darstellung des DES-Algorithmus anhand der einzelnen Runden; und
- Fig. 7: eine detaillierte Darstellung der inneren Funktion f des DES-Algorithmus.

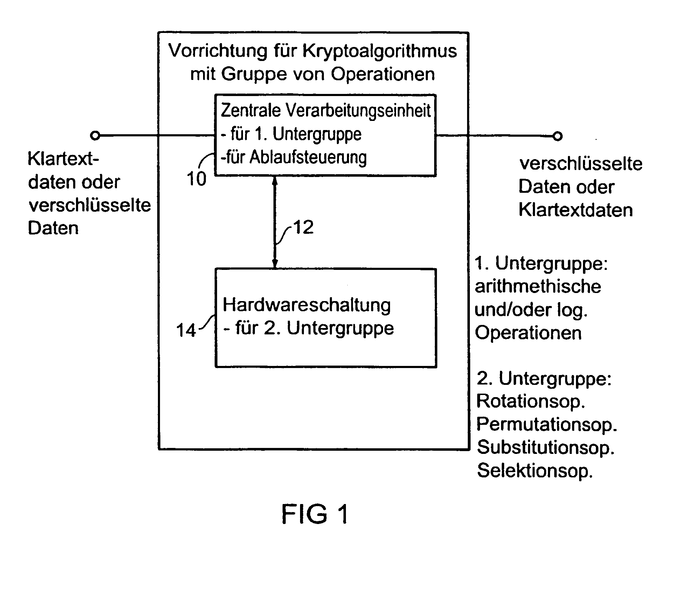

Fig. 1 zeigt ein Blockschaubild einer erfindungsgemäßen Vorrichtung zum Ausführen eines Kryptoalgorithmus, wobei der Kryptoalgorithmus eine Gruppe von Operationen aufweist, die eine erste Untergruppe und eine zweite Untergruppe umfaßt. Die Vorrichtung weist insbesondere eine zentrale Verarbeitungseinheit 10 zum Durchführen der ersten Untergruppe von Operationen und zur Ablaufsteuerung des Kryptoalgorithmus auf. Die zentrale Verarbeitungseinheit ist über einen Datenbus 12 mit einer Hardware-Schaltung 14 verkoppelt, wobei die Hardware-Schaltung speziell für die Ausführung der zweiten Untergruppe von Operationen entworfen ist. Die Hardware-Schaltung umfaßt keine software-mäßige Programmierbarkeit und besteht vorzugsweise lediglich aus Registern, einem oder mehreren Multiplexern und einem Speicher sowie aus Verbindungsleitungen zwischen diesen einzelnen Elementen.

Bei einem bevorzugten Ausführungsbeispiel der vorliegenden Erfindung umfaßt die erste Untergruppe von Operationen, die durch die zentrale Verarbeitungseinheit ausgeführt werden, arithmetische und/oder logische Operationen, während die zweite Untergruppe von Operationen Rotations-Operationen, Permutations-Operationen, Expansions-Operationen, Selektions-Operation oder Substitutions-Operationen für durch den Kryptoalgorithmus verarbeitete Datenbits bzw. Blöcke von Datenbits aufweist. Erfindungsgemäß ist die Gruppe von Operationen, die der Kryptoalgorithmus aufweist, derart unterteilt, daß die Komplexität der zusätzlichen Hardware möglichst gering ist. Ferner werden die Operationen durch die Hardware-Schaltung ausgeführt, die auf einer Standard-CPU-Architektur, auf der die zentrale Verarbeitungseinheit basiert, eine umständliche und langsame Realisierung erfordern würden.

Am Beispiel des DES-Algorithmus sind die Operationen, die durch die Hardware-Schaltung ausgeführt werden, also die in der zweiten Untergruppe aufgelistet sind, die 28-Bit-Rotationsbefehle für die Schlüsselgenerierung, sämtliche Bit-Tausch-Operationen, die sich aus den 6 Tabellen für BitSelektionen im DES-Algorithmus ergeben, sowie der Zugriff auf die 8 S-BOXEN.

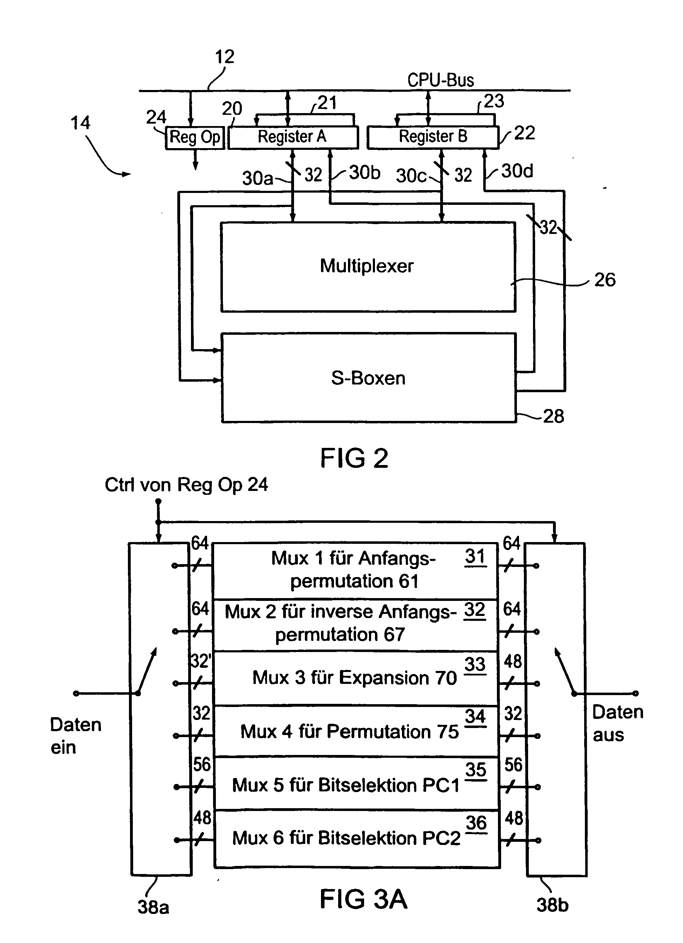

Fig. 2 zeigt eine bevorzugte Ausführungsform der Hardware-Schaltung für den DES-Algorithmus als Kryptoalgorithmus. Die Hardware-Schaltung 14 in Fig. 2 umfaßt ein erstes Register 20 mit einer Breite von 32 Bits, ein zweites Register 22, das ebenfalls eine Breite von 32 Bits hat, ein Steuerregister (Reg Op) 24, das vorzugsweise eine Breite von 3 Bits hat, eine Multiplexer-Einrichtung 26 sowie einen S-BOXEN-Block 28. Die Register sind über 32-Bit-Datenbusse 30a bis 30d mit der Multiplexer-Einrichtung 26 bzw. dem S-BOXEN-Block 28 wie in Fig. 2 dargestellt verbunden. Die Register 20, 22, von denen je nach Operation eines für die linke Hälfte und eines für die rechte Hälfte der Bits eines Blocks vorgesehen sind, umfassen ferner eine Rotationsfähigkeit, wie es durch Rotationspfeile 21, 23 in Fig. 2 schematisch dargestellt ist. Es sei darauf hingewiesen, daß eine Rotationsfähigkeit über 28 Bits zur Schlüsselgenerierung beim DES-Algorithmus ausreichend ist, weshalb sich die Pfeile 21, 23 nicht bis zum oberen Ende der Register 20, 22 erstrecken, sondern lediglich bis zum 28. Bit des jeweiligen Registers.

Die Operationen werden dadurch ausgeführt, daß Daten in die beiden Register 20, 22 geschrieben werden und mit dem Schreiben des Steuerregisters 24 der Befehl, wie z.B. Bit-Tauschen nach DES-Tabelle 1 bis 6, abgearbeitet und das Ergebnis wieder in die beiden Datenregister gespeichert wird, aus denen es dann - veranlaßt von der CPU - gelesen werden kann. Zusätzlich sind die beiden Register mit einer Rotationsfähigkeit über 28 Bit ausgestattet, wie es ausgeführt worden ist.

Aus den S-BOXEN wird in gleicher Art gelesen. Die Adressen für die S-BOXEN werden parallel in die Register 1 und 2 geschrieben und das Ergebnis erscheint dann danach in denselben Registern.

Die erforderliche Sicherheit kann beispielsweise durch redundante Auslegung des Multiplexer- und S-BOX-Blocks einschließlich einer inversen Ansteuerung und einer inversen Ausgabe, erreicht werden. Die Programmierung des DES-Algorithmus bzw. des 2DES-Algorithmus oder des 3DES-Algorithmus findet auf der CPU statt, wobei für alle Operationen der zweiten Untergruppe die Hardware-Schaltung 14 genutzt wird.

Fig. 3a zeigte eine bevorzugte Ausführungsform der Multiplexer-Einrichtung 26 von Fig. 2. Die Multiplexer-Einrichtung 26 umfaßt 6 verschiedene Multiplexer 31 bis 36, die die jeweiligen Bit-Tausch-Operationen, d.h. Permutations-Operationen, Expansions-Operationen, Selektions-Operation etc. in fest verdrahteter Form umfassen.

Insbesondere ist der Multiplexer 31 für die Anfangspermutation 61 von Fig. 6 vorgesehen. Diese Permutation bildet 64 Eingangsbits auf 64 Ausgangsbits ab.

Der Multiplexer 32 ist für die inverse Anfangspermutation, d.h. für die Endpermutation 67 von Fig. 6 vorgesehen. Auch er bildet in fest verdrahteter Form 64 Eingangsbits auf 64 Ausgangsbits ab.

Der Multiplexer 33 ist für die Expansion 70 von Fig. 7 in der inneren Funktion f vorgesehen. Die Expansion bildet 32 Eingangsbits auf 48 Ausgangsbits ebenfalls in fest verdrahteter Form ab.

Der Multiplexer 34 ist für die Permutation 75 von Fig. 7 vorgesehen und bildet 32 Eingangsbits auf 32 Ausgangsbits ebenfalls in fest verdrahteter Form ab.

Schließlich sind noch die Multiplexer 35 und 36 für die Bitselektion im Rahmen der Schlüsselgenerierung ebenfalls in fest verdrahteter Form vorgesehen, wobei der Multiplexer 35 für die Bitselektion PC1 56 Eingangsbits auf 56 Ausgangsbits abbildet, während der Multiplexer 36 für die Bitselektion PC2 48 Eingangsbits auf 48 Ausgangsbits abbildet.

Zur Auswahl der einzelnen Multiplexer ist eine Multiplexerauswahleinrichtung vorgesehen, die aus einer Eingangsauswahleinrichtung 38a und einer Ausgangsauswahleinrichtung 38b besteht, welche von dem in dem Steuerregister 24 geschriebenen Bitmuster gesteuert werden. Das Steuerregister 24 ist ein 3-Bit-Register bei einem bevorzugten Ausführungsbeispiel der vorliegenden Erfindung, wobei diese 3 Bits ausreichen, um einen der 6 in Fig. 3a gezeigten Multiplexer innerhalb der Multiplexer-Einrichtung 26 von Fig. 2 auswählen zu können. Wie es bereits ausgeführt worden ist, wird das Steuerregister 24 von der zentralen Verarbeitungseinheit 10 von Fig. 1 im Rahmen der Ablaufsteuerung beschrieben, um die richtige Operation im Rahmen des Kryptoalgorithmus-Ablaufs auszuwählen.

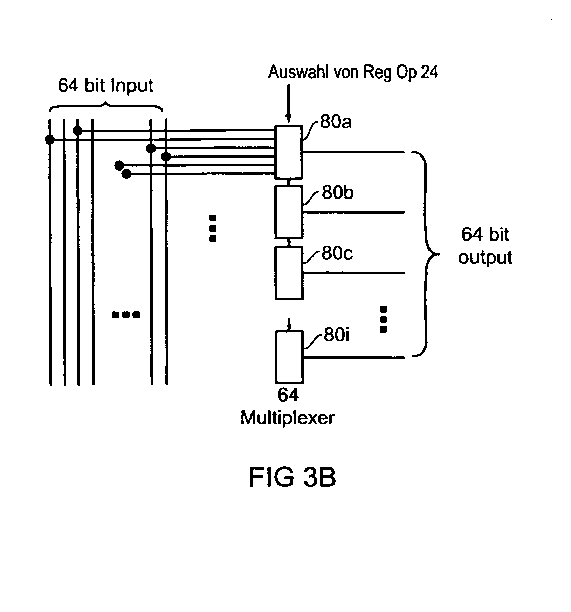

Fig. 3b zeigt ein alternatives Ausführungsbeispiel zur Implementierung der Multiplexereinrichtung 26 von Fig. 2. Die Multiplexereinrichtung umfasst eine Anzahl von Einzelmultiplexern (80a, 80b, 80c,..., 80i), wobei die Anzahl von Einzelmultiplexern gleich der Anzahl von Eingangsbits ist, und wobei jeder Einzelmultiplexer einen Ausgang aufweist, durch den ein Ausgangsbit einer Operation definiert ist. Ferner hat jeder Einzelmultiplexer einen Eingang, der eine Anzahl von Eingangsleitungen aufweist, wobei die Anzahl von Eingangsleitungen gleich der Anzahl von durch die Multiplexereinrichtung durchzuführenden Operationen oder kleiner ist, und wobei jeder Einzelmultiplexer durch das Steuerregister steuerbar ist, um eine der Anzahl von Eingangsleitungen mit dem Ausgang zu verbinden. Insbesondere legt beispielsweise der erste Einzelmultiplexer immer das erste Bit der durchzuführenden Permutationen/Selektionen oder Expansionen fest. Im vorliegenden Ausführungsbeispiel existieren sechs solche Operationen. Für jede der Operationen ist eine Eingangsleitung vorgesehen, die mit der entsprechenden Leitung des 64-Bit-Inputs verbunden ist. Je nach ausgewählter Operationen wird daher die dieser Operation zugeordnete Eingangsleitung mit der Ausgangsleitung des Multiplexers abhängig von dem Stand des Steuerregisters 24 verbunden.

Der oberste Multiplexer wählt also je nach dem anliegenden Auswahlsignal aus, welches Inputbit das neue Outputbit sein soll. Der zweitoberste 'Multiplexer mach dies für das Outputbit 2 usw. Da nicht jede Operation einen 64 Bit breiten Output hat, muß nicht jeder Multiplexer 6 Eingänge haben, sondern kann und wird vorzugsweise auch weniger Eingänge haben.

Fig. 4 zeigt eine detailliertere Darstellung der S-BOXEN-Einrichtung 28 von Fig. 4. Die S-BOXEN-Einrichtung umfaßt die 8 S-BOXEN S-BOX 1 bis S-BOX 8 des DES-Algorithmus, welche jeweils 6 Bits als Eingangsadresse erhalten und 4 Bits an Ausgangsdaten ausgeben. Die S-BOXEN sind mit dem 48-Bit-Eingangsbus fest verdrahtet und ausgangsseitig mit dem 32-Bit-Ausgangsbus ebenfalls fest verdrahtet, derart, daß sich eine automatische Aufteilung der Adressen für eine der 8 S-BOXEN anhand der Wertigkeit der Bits auf dem 48-Bit-breiten Eingangsbus ergibt.

Im nachfolgenden wird der Ablauf des DES-Algorithmus anhand des Flußdiagramms von Fig. 6 unter Verwendung der zentralen Verarbeitungseinheit 10 und der Hardware-Schaltung 14 dargestellt. Der 64-Bit-Eingangsdatenblock wird von der zentralen Verarbeitungseinheit erhalten und in die beiden Register 20, 22 eingespeist. Gleichzeitig wird das Steuerregister 24 angesteuert, um den Multiplexer 31 der Multiplexer-Einrichtung 26 auszuwählen. Die zu invertierenden 64 Bits werden von den Registern 20, 22 in den Multiplexer 31 eingespeist, so daß sich 64 Ausgangsbits ergeben, die wieder in die Register 20, 22 geschrieben werden und die Eingangsdaten damit überschreiben. Hierauf wird der Inhalt des Registers 22 nach einer Neubeschreibung des Steuerregisters 24 der Multiplexer-Einrichtung 26 zugeführt, damit die Expansion 70 durchgeführt wird. Das Ergebnis der Expansion 70 wird dann wieder in das Register 22 geschrieben und von der zentralen Verarbeitungseinheit gelesen, damit dieselbe unter Verwendung des Schlüssels für die erste Runde die XOR-Verknüpfung 71 von Fig. 7 durchführen kann.

Die 48 Bits, die die CPU aufgrund der XOR-Verknüpfung mit dem Rundenschlüssel berechnet hat, stellen die Adressen für den SBOX-Zugriff dar. Die XOR-Verknüpfung mit dem Rundenschlüssel ist somit die Adressberechnung für den SBOX-Zugriff. Die 48 Adreßbits für die 8 S-BOXEN werden dann von der CPU wieder in die beiden Register 20, 22 geschrieben und der S-BOXEN-Einrichtung 28, die typischerweise als Nur-Lese-Speicher ausgeführt sein wird, zugeführt, um ausgangsseitig die Bits (74 in Fig. 7) zu erhalten, welche z.B. wieder in das Register B geschrieben werden, um dann wieder, nach entsprechender Neu-Beschreibung des Steuerregisters 24 der Multiplexer-Einrichtung zugeführt zu werden, wobei das Steuerregister 24 derart beschrieben ist, daß die Multiplexer-Einrichtung den Multiplexer 34 für die Permutation 75 von Fig. 7 auswählt. Die 32 Ausgangsbits werden wieder in das Register B geschrieben. Nun liest die zentrale Verarbeitungseinheit wieder den Inhalt des Registers B 22 aus. Darüber hinaus liest die CPU den Inhalt des Registers A 20, um die XOR-Operationen 64 von Fig. 6 durchzuführen, um neue Eingangsdaten für die nächste Runde zu erhalten, die genauso wie die erste Runde ausgeführt wird, nun jedoch unter Verwendung des Schlüssels für die zweite Runde.

Zur Schlüsselgenerierung wird der 64-Bit-Schlüssel K von der zentralen Verarbeitungseinheit in die beiden Register A, B eingelesen. Hierauf werden die Längsverschiebungswerte für die 28-Bit-Rotationen definiert, um dann - nach entsprechender Beschreibung des Steuerregisters 24 durch die zentrale Verarbeitungseinheit - die Bitselektionen durch die Multiplexer 35 und 36 durchzuführen, deren Ergebnisse in die Register 20, 22 geschrieben werden, wo dann die entsprechenden Rotationen stattfinden.

Es sei darauf hingewiesen, daß die Hardware-Schaltung entsprechend für die DES-Entschlüsselung eingesetzt werden kann.

Darüber hinaus sei darauf hingewiesen, daß sich ähnliche Hardware-Schaltungen für andere Kryptoalgorithmen ergeben als den DES-Algorithmus, solange diese Operationen umfassen, die durch fest verdrahtete Multiplexer, durch Speicher oder durch Register mit Rotationsfähigkeit hardware-mäßig ausgeführt werden können.

### Bezugszeichenliste

10 ZENTRALE VERARBEITUNGSEINHEIT
12 DATENBUS
14 HARDWARE-SCHALTUNG
20 ERSTES REGISTER
21 ROTATIONSFÄHIGKEIT DES ERSTEN REGISTERS
22 ZWEITES REGISTER
23 ROTATIONSFÄHIGKEIT DES ZWEITEN REGISTERS
24 STEUERREGISTER
26 MULTIPLEXER-EINRICHTUNG
28 S-BOXEN
30a bis 30d DATENVERBINDUNGEN IN DER HARDWARE-SCHALTUNG
31 MULTIPLEXER FÜR DIE ANFANGS-PERMUTATION
32 MULTIPLEXER FÜR DIE INVERSE ANFANGS-PERMUTATION
33 MULTIPLEXER FÜR DIE EXPANSION
34 MULTIPLEXER FÜR DIE PERMUTATION
35 MULTIPLEXER FÜR DIE BITSELEKTION PC1
36 MULTIPLEXER FÜR DIE BITSELEKTION PC2
38a EINGANGSAUSWAHLEINRICHTUNG
38b AUSGANGSAUSWAHLEINRICHTUNG
50 DES-ALGORITHMUS
52 INVERSER DES-ALGORITHMUS
60 EINGANGSBLOCK
61 ANFANGSPERMUTATION
62 AUFTEILUNGSBLOCK
63 INNERE FUNKTION DER ERSTEN RUNDE
64 XOR-VERKNÜPFUNG
65 XOR-VERKNÜPFUNG
66 AUSGANGSBLOCK
67 INVERSE ANFANGSPERMUTATION
68 AUSGABE
69 INNERE FUNKTION DER ZWEITEN RUNDE
70 EXPANSIONS-OPERATION
71 XOR-VERKNÜPFUNG MIT DEM RUNDEN SCHLÜSSEL
72 EINGANGSDATEN FÜR DIE BITSUBSTITUTION
73 BITSUBSTITUTION
74 AUSGANGSDATEN DER BITSUBSTITUTION
75 PERMUTATION IN DER RUNDE
80a - 80i EINZELMULTIPLEXER

## Patentansprüche

1. Vorrichtung zum Ausführen eines Kryptoalgorithmus, wobei der Kryptoalgorithmus eine Gruppe von Operationen aufweist, die eine erste und eine zweite Untergruppe umfaßt, mit folgenden Merkmalen:
einer zentralen Verarbeitungseinheit (10) zum Durchführen der ersten Untergruppe und zur Ablaufsteuerung des Kryptoalgorithmus;
einer Hardware-Schaltung (14) zum Durchführen der zweiten Untergruppe, wobei die Hardware-Schaltung (14) ein erstes Register (20) mit einer Rotationsfähigkeit (21), ein zweites Register (22) mit einer Rotationsfähigkeit (23), eine Multiplexer-Einrichtung (26), einen Substitutionsspeicher (28) zum Speichern einer Bitsubstitutions-Vorschrift, und ein Steuerregister (24) zum Steuern der Multiplexer-Einrichtung (26) abhängig von einem von der zentralen Verarbeitungseinheit (10) in das Steuerregister (24) geschriebenen Bitmuster, aufweist, und wobei das erste Register (20) und das zweite Register (22) mit einem Datenbus (12), der Multiplexer-Einrichtung (26) und dem Substitutionsspeicher (28) verbunden sind; und
wobei der Datenbus (12) zwischen der zentralen Verarbeitungseinheit und der Hardware-Schaltung angeordnet ist.

2. Vorrichtung nach Anspruch 1, bei der die erste Untergruppe arithmetische und/oder logische Operationen aufweist, und bei der die zweite Untergruppe Rotations-Operationen, Permutations-Operationen, Expansions-Operationen, Selektions-Operation oder Substitutions-Operationen aufweist.

3. Vorrichtung nach Anspruch 1 oder 2, bei der der Kryptoalgorithmus Runden-basiert ist, wobei aus einem Ausgangsschlüssel für jede Runde ein Rundenschlüssel unter Verwendung einer Rotation und einer Bitselektion erzeugbar ist, wobei die Multiplexer-Einrichtung einen Schlüssel-Multiplexer (35, 36) zur Durchführung der Bitselektion aufweist.

4. Vorrichtung nach einem der vorhergehenden Ansprüche, bei der der Kryptoalgorithmus als Operation eine anfängliche Permutation (61) eines zu verschlüsselnden Blocks aus Eingangsdaten umfaßt, wobei die Multiplexer-Einrichtung einen einen Anfangs-Permutations-Multiplexer (31) zum Durchführen der Anfangspermutation aufweist.

5. Vorrichtung nach einem der vorhergehenden Ansprüche, bei der der Kryptoalgorithmus eine End-Permutation (67) aufweist, um einen Block mit verschlüsselten Daten zu erhalten, wobei die Multiplexer-Einrichtung einen End-Permutations-Multiplexer (32) aufweist, um die End-Permutation durchzuführen.

6. Vorrichtung nach einem der vorhergehenden Ansprüche, bei der der Kryptoalgorithmus eine Expansions-Operation (70) aufweist, wobei die Multiplexer-Einrichtung einen Expansions-Multiplexer (33) zum Durchführen der Expansion aufweist.

7. Vorrichtung nach einem der vorhergehenden Ansprüche, bei der der Kryptoalgorithmus Runden-basiert ist und in jeder Runde eine Permutation aufweist, wobei die Multiplexer-Einrichtung einenPermutations-Multiplexer (34) aufweist, um die Permutations-Operation durchzuführen.

8. Vorrichtung nach Anspruch 1, bei der Adressen für die Bitsubstitutions-Operation unter Verwendung von zu sudstituierenden Bits berechnet werden, wobei die Adreßberechnung in der zentralen Verarbeitungseinrichtung (10) durch XOR-Verknüpfung mit einem Rundenschlüssel durchführbar ist.

9. Vorrichtung nach einem der vorhergehenden Ansprüche, bei der der Kryptoalgorithmus zumindest eine XOR-Operation (71, 64) aufweist, wobei die XOR-Operation in der zentralen Verarbeitungseinrichtung (10) ausführbar ist.

10. Vorrichtung nach einem der vorhergehenden Ansprüche,
bei der der Kryptoalgorithmus ein DES-Algorithmus ist.

11. Vorrichtung nach Anspruch 1, bei der die Multiplexerein-richtung mehrere Einzelmultiplexer (31, 32, 33, 34, 35, 36) aufweist, wobei jeder Einzelmultiplexer ausgebildet ist um eine Expansions-Operation (70), eine Permutations-Operation (61, 67, 75) oder eine Bitselektions-Operation auszuführen.

12. Vorrichtung nach Anspruch 1, bei der die Multiplexereinrichtung eine Anzahl von Einzelmultiplexern (80a, 80b, 80c,..., 80i) aufweist, wobei die Anzahl von Einzelmultiplexern gleich der Anzahl von Eingangsbits ist, und wobei jeder Einzelmultiplexer einen Ausgang aufweist, durch den ein Ausgangsbit einer Operation definiert ist, und wobei jeder Einzelmultiplexer einen Eingang aufweist, der eine Anzahl von Eingangsleitungen aufweist, wobei die Anzahl von Eingangsleitungen gleich der Anzahl von durch die Multiplexereinrichtung durchzuführenden Operationen oder kleiner ist, und wobei jeder Einzelmultiplexer durch das Steuerregister steuerbar ist, um eine der Anzahl von Eingangsleitungen mit dem Ausgang zu verbinden.

13. Vorrichtung nach Anspruch 1, 11 oder 12, bei der der Kryptoalgorithmus ein DES-Algorithmus ist,
bei dem das erste Register (20) und das zweite Register (22) zwei 32-Bit-Register sind,
bei dem das Steuerregister (24) ein 3-Bit-Register ist, und
bei dem Datenverbindungen zwischen dem ersten Register und dem zweiten Register und der Multiplexer-Einrichtung (26) bzw. dem Substitutionsspeicher (28) 32-Bit-Verbindungen sind.

14. Vorrichtung nach einem der vorhergehenden Ansprüche,
bei der die zentrale Verarbeitungseinrichtung ausgebildet ist, um gegen externe Angriffe sicher zu sein;

15. Vorrichtung nach einem der vorhergehenden Ansprüche,
bei der die Hardware-Schaltung (14) ausgebildet ist, um gegenüber externen Angriffen abgesichert zu sein.

16. Vorrichtung nach einem der vorhergehenden Ansprüche, die mit anderen Komponenten auf einer integrierten Schaltung integriert ist, wobei die zentrale Verarbeitungseinheit (10) ferner ausgebildet ist, um mit den anderen Komponenten zu interagieren oder die anderen Komponenten zu steuern.

17. Vorrichtung nach Anspruch 14, bei der die integrierte Schaltung ein Sicherheits-IC ist oder für eine Chipkarte vorbestimmt ist.

18. Verfahren zum Ausführen eines Kryptoalgorithmus, wobei der Kryptoalgorithmus eine Gruppe von Operationen aufweist, die eine erste und eine zweite Untergruppe umfaßt, unter Verwendung einer zentralen Verarbeitungseinheit (10) und einer Hardware-Schaltung (14), die mit der zentralen Verarbeitungseinheit (10) über einen Datenbus (12) verbunden ist, wobei die Hardware-Schaltung (14) ein erstes Register (20) mit einer Rotationsfähigkeit (21), ein zweites Register (22) mit einer Rotationsfähigkeit (23), eine Multiplexer-Einrichtung (26), einen Substitutionsspeicher (28) zum Speichern einer Bitsubstitutions-Vorschrift, und ein Steuerregister (24) zum Steuern der Multiplexer-Einrichtung (26) abhängig von einem von der zentralen Verarbeitungseinheit (10) in das Steuerregister (24) geschriebenen Bitmuster, aufweist, und wobei das erste Register (20) und das zweite Register (22) mit dem Datenbus (12), der Multiplexer-Einrichtung (26) und dem Substitutionsspeicher (28) verbunden sind, mit folgenden Schritten:
in der zentralen Verarbeitungseinheit (10), Zuführen von Eingangsdaten für eine Operation der zweiten Untergruppe zu der Hardware-Schaltung (14) und Erhalten eines Ergebnisses der Operation von der Hardware-Schaltung (14);
in der Hardware-Schaltung (14), Durchführen der Operation der zweiten Untergruppe mit von der zentralen Verarbeitungseinheit (10) zugeführten Eingangsdaten für die Operation; und
Durchführen einer Operation der ersten Untergrupe sowie einer Ablaufsteuerung des Kryptoalgorithmus in der zentralen Verarbeitungseinheit.

19. Verfahren nach Anspruch 18, bei dem der Kryptoalgorithmus ein DES-Algorithmus ist, wobei die erste Unter-gruppe arithmetische und/oder logische Operationen aufweist, und die zweite Untergruppe eine Rotations-Operation, eine Permutations-Operation, eine Expansions-Operation, eine Selektions-Operation oder eine Substitutions-Operation aufweist.

20. Verfahren nach Anspruch 18 oder 19, bei dem der Kryptoalgorithmus eine XOR-Verknüpfung mit einem Schlüssel aufweist, wobei die XOR-Verknüpfung in der zentralen Verarbeitungseinheit ausführbar ist.

## Claims

1. A device for executing a cryptoalgorithm, wherein the cryptoalgorithm comprises a group of operations including a fist and a second sub-group, comprising:
a central processing unit (10) for performing the first sub-group and for a flow control of the cryptoalgorithm;
a hardware circuit (14) for performing the second sub-group, wherein the hardware circuit (14) comprises a first register (20) having a rotational ability (21), a second register (22) having a rotational ability (23), a multiplexer means (26), a substitution memory (28) for storing a bit substitution rule, and a control register (24) for controlling the multiplexer means (26) depending on a bit pattern written into the control register (24) by the central processing unit (10), and wherein the first register (20) and the second register (22) are connected to a data bus (12), the multiplexer means (26) and the substitution memory (28); and
wherein the data bus (12) is arranged between the central processing unit and the hardware circuit.

2. The device according to claim 1, wherein the first sub-group comprises arithmetic and/or logic operations, and wherein the second sub-group comprises rotation operations, permutation operations, expansion operations, selection operations or substitution operations.

3. The device according to claims I or 2, wherein the cryptoalgorithm is round-based, wherein a round key for each round can be generated from an output key using a rotation and a bit selection, and wherein the multiplexer means comprises a key multiplexer (35, 36) for performing the bit selection.

4. The device according to any of the preceding claims, wherein the cryptoalgorithm, as an operation, includes an initial permutation (61) of a block of input data to be encrypted, wherein the multiplexer means comprises an initial permutation multiplexer (31) for performing the initial permutation.

5. The device according to any of the preceding claims, wherein the cryptoalgorithm comprises a final permutation (67) to obtain a block of encrypted data, wherein the multiplexer means comprises a final permutation multiplexer (32) to perform the final permutation.

6. The device according to any of the preceding claims, wherein the cryptoalgorithm comprises an expansion operation (70), wherein the multiplexer means comprises an expansion multiplexer (33) for performing the expansion.

7. The device according to any of the preceding claims, wherein the cryptoalgorithm is round-based and comprises a permutation in each round, wherein the multiplexer means comprises a permutation multiplexer (34) to perform the permutation operation.

8. The device according to claim 1, wherein addresses for the bit substitution operation are calculated using bits to be substituted, wherein the address calculation can be performed in the central processing unit (10) by an XOR linkage with a round key.

9. The device according to any of the preceding claims, wherein the cryptoalgorithm comprises at least one XOR operation (71, 64), wherein the XOR operation can be executed in the central processing unit (10).

10. The device according to any of the preceding claims,
wherein the cryptoalgorithm is a DES algorithm.

11. The device according to claim 1, wherein the multiplexer means comprises several individual multiplexers (31, 32, 33, 34, 35, 36), wherein each individual multiplexer is formed to execute an expansion operation (70), a permutation operation (61, 67, 75) or a bit selection operation.

12. The device according to claim 1, wherein the multiplexer means comprises a number of individual multiplexers (80a, 80b, 80c, ..., 80i), wherein the number of individual multiplexers equals the number of input bits, and wherein each individual multiplexer comprises an output by which an output bit of an operation is defined, and wherein each individual multiplexer comprises an input having a number of input lines, wherein the number of input lines is equal to or smaller than the number of operations to be performed by the multiplexer means, and wherein each individual multiplexer is controllable by the control register to connect one of the number of input lines to the output.

13. The device according to claims 1, 11 or 12, wherein the cryptoalgorithm is a DES algorithm,
wherein the first register (20) and the second register (22) are two 32-bit registers,
wherein the control register (24) is a 3-bit register, and
wherein data connections between the first register and the second register and the multiplexer means (26) and substitution memory (28), respectively, are 32-bit connections.

14. The device according to any of the preceding claims,
wherein the central processing unit is formed to be safe from external attacks.

15. The device according to any of the preceding claims,
wherein the hardware circuit (14) is formed to be protected from external attacks.

16. The device according to any of the preceding claims, being integrated with other components on an integrated circuit, wherein the central processing unit (10) is further formed to interact with the other components or to control the other components.

17. The device according to claim 14, wherein the integrated circuit is a safety IC or is predestined for a chipcard.

18. A method of executing a cryptoalgorithm, wherein the cryptoalgorithm comprises a group of operations including a first and a second sub-group, using a central processing unit (10) and a hardware circuit (14) connected to the central processing unit (10) via a data bus (12), wherein the hardware circuit (14) comprises a first register (20) having a rotational ability (21), a second register (22) having a rotational ability (23), a multiplexer means (26), a substitution memory (28) for storing a bit substitution rule, and a control register (24) for controlling the multiplexer means (26) depending on a bit pattern written into the control register (24) by the central processing unit (10), and wherein the first register (20) and the second register (22) are connected to the data bus (12), the multiplexer means (26) and the substitution memory (28), comprising:
in the central processing unit (10), feeding input data for an operation of the second sub-group to the hardware circuit (14) and obtaining a result of the operation from the hardware circuit (14);
in the hardware circuit (14), performing the operation of the second sub-group with input data for the operation fed by the central processing unit (10); and
performing an operation of the first sub-group and a flow control of the cryptoalgorithm in the central processing unit.

19. The method according to claim 18, wherein the cryptoalgorithm is a DES algorithm, wherein the first sub-group comprises arithmetic and/or logic operations and the second sub-group comprises a rotation operation, a permutation operation, an expansion operation, a selection operation or a substitution operation.

20. The method according to claims 18 or 19, wherein the cryptoalgorithm comprises an XOR linkage with a key, wherein the XOR linkage is executable in the central processing unit.

## Revendications

1. Dispositif pour exécuter un algorithme cryptographique, l'algorithme cryptographique présentant un groupe d'opérations comprenant un premier et un deuxième sous-groupe, aux caractéristiques suivantes:
une unité de traitement centrale (10) destinée à exécuter le premier sous-groupe et à commander le déroulement de l'algorithme cryptographique;
un circuit de matériel (14) destiné à exécuter le deuxième sous-groupe, le circuit de matériel (14) présentant un premier registre (20) à aptitude à la rotation (21), un deuxième registre (22) à aptitude à la rotation (23), un moyen multiplexeur (26), une mémoire à substitution (28) destinée à mémoriser une règle de substitution de bits, et un registre de commande (24) destiné à commander le moyen multiplexeur (26) en fonction d'un modèle de bits écrit dans le registre de commande (24) par l'unité de traitement centrale (10), et le premier registre (20) et le deuxième registre (22) étant reliés à un bus de données (12), au moyen multiplexeur (26) et à la mémoire à substitution (28); et
le bus de données (12) étant disposé entre l'unité de traitement centrale et le circuit de matériel.

2. Dispositif selon la revendication 1, dans lequel le premier sous-groupe présente des opérations arithmétiques et/ou logiques, et dans lequel le deuxième sous-groupe présente des opérations de rotation, des opérations de permutation, des opérations d'expansion, des opérations de sélection ou des opérations de substitution.

3. Dispositif selon la revendication 1 ou 2, dans lequel l'algorithme cryptographique est à base de passages, à partir d'une clé de sortie pour chaque passage pouvant être générée une clé de passage à l'aide d'une rotation et d'une sélection de bits, le moyen multiplexeur présentant un multiplexeur de clé (35, 36) pour exécuter la sélection de bits.

4. Dispositif selon l'une des revendications précédentes, dans lequel l'algorithme cryptographique comprend, comme opération, une permutation initiale (61) d'un bloc à crypter à partir de données d'entrée, le moyen multiplexeur présentant un multiplexeur de permutation initiale (31) pour exécuter la permutation initiale.

5. Dispositif selon l'une des revendications précédentes, dans lequel l'algorithme cryptographique comprend une permutation finale (67), pour obtenir un bloc de données à crypter, le moyen multiplexeur présentant un multiplexeur de permutation finale (32), pour exécuter la permutation finale.

6. Dispositif selon l'une des revendications précédentes, dans lequel l'algorithme cryptographique présente une opération d'expansion (70), le moyen multiplexeur présentant un multiplexeur d'expansion (33) pour exécuter l'expansion.

7. Dispositif selon l'une des revendications précédentes, dans lequel l'algorithme cryptographique est à base de passages et présente, dans chaque passage, une permutation, le moyen multiplexeur présentant un multiplexeur de permutation (34), pour exécuter l'opération de permutation.

8. Dispositif selon la revendication 1, dans lequel les adresses pour l'opération de substitution de bits sont calculées à l'aide de bits à substituer, le calcul des adresses pouvant être réalisé dans le moyen de traitement central (10) par couplage XOR avec une clé de passage.

9. Dispositif selon l'une des revendications précédentes, dans lequel l'algorithme cryptographique présente au moins une opération XOR (71, 64), l'opération XOR pouvant être exécutée dans le moyen de traitement central (10).

10. Dispositif selon l'une des revendications précédentes,
dans lequel l'algorithme cryptographique est un algorithme DES.

11. Dispositif selon la revendication 1, dans lequel le moyen multiplexeur présente plusieurs multiplexeurs individuels (31, 32, 33, 34, 35, 36), chaque multiplexeur individuel étant réalisé pour exécuter une opération d'expansion (70), une opération de permutation (61, 67, 75) ou une opération de sélection de bits.

12. Dispositif selon la revendication 1, dans lequel le moyen multiplexeur présente un nombre de multiplexeurs individuels (80a, 80b, 80c, ..., 80i), le nombre de multiplexeurs individuels étant égal au nombre de bits d'entrée, et chaque multiplexeur individuel présentant une sortie par laquelle est défini un bit de sortie d'une opération, et chaque multiplexeur individuel présentant une entrée présentant un nombre de lignes d'entrée, le nombre de lignes d'entrée étant égal ou inférieur au nombre d'opérations à exécuter par le moyen multiplexeur, et chaque multiplexeur individuel pouvant être commandé par le registre de commande, pour connecter l'un parmi le nombre de lignes d'entrée à la sortie.

13. Dispositif selon la revendication 1, 11 ou 12, dans lequel l'algorithme cryptographique est un algorithme DES,
dans lequel le premier registre (20) et le deuxième registre (22) sont deux registres de 32 bits,
dans lequel le registre de commande (24) est un registre de 3 bits, et
dans lequel les liaisons de données entre le premier registre et le deuxième registre et le moyen multiplexeur (26) ou la mémoire à substitution (28) sont des liaisons à 32 bits.

14. Dispositif selon l'une des revendications précédentes,
dans lequel le moyen de traitement central est réalisé de manière à être sûr contre des attaques externes;

15. Dispositif selon l'une des revendications précédentes,
dans lequel le circuit de matériel (14) est réalisé de manière à être sécurisé contre des attaques externes;

16. Dispositif selon l'une des revendications précédentes, qui est intégré avec d'autres composants sur un circuit intégré, l'unité de traitement centrale (10) étant par ailleurs réalisée de manière à interagir avec d'autres composants ou à commander les autres composants.

17. Dispositif selon la revendication 14, dans lequel le circuit intégré est un CI de sécurité ou est prédestiné à une carte à puce.

18. Procédé pour exécuter un algorithme cryptographique, l'algorithme cryptographique présentant un groupe d'opérations comprenant un premier et un deuxième sous-groupe, à l'aide d'une unité de traitement centrale (10) et un circuit de matériel (14) qui est relié à l'unité de traitement centrale (10) par un bus de données (12), le circuit de matériel (14) présentant un premier registre (20) à aptitude à la rotation (21), un deuxième registre (22) à aptitude à la rotation (23), un moyen multiplexeur (26), une mémoire à substitution (28) destinée à mémoriser une règle de substitution de bits, et un registre de commande (24) destiné à commander le moyen multiplexeur (26) en fonction d'un modèle de bits écrit dans le registre de commande (24) par l'unité de traitement centrale (1.0), et le premier registre (20) et le deuxième registre (22) étant reliés au bus de données (12), au moyen multiplexeur (26) et à la mémoire à substitution (28); aux étapes suivantes consistant à:
dans l'unité de traitement centrale (10), alimenter les données d'entrée pour une opération du deuxième sous-groupe vers le circuit de matériel (14) et obtenir un résultat de l'opération du circuit de matériel (14);
dans le circuit de matériel (14), exécuter l'opération du deuxième sous-groupe avec les données d'entrée pour l'opération alimentées par l'unité de traitement centrale (10); et
exécuter une opération du premier sous-groupe ainsi qu'une commande de déroulement de l'algorithme cryptographique dans l'unité de traitement centrale.

19. Procédé selon la revendication 18, dans lequel l'algorithme cryptographique est un algorithme DES, le premier sous-groupe présentant des opérations arithmétiques et/ou logiques, et le deuxième sous-groupe présentant une opération de rotation, une opération de permutation, une opération d'expansion, une opération de sélection ou une opération de substitution.

20. Procédé selon la revendication 18 ou 19, dans lequel l'algorithme cryptographique présente un couplage XOR avec une clé, le couplage XOR pouvant être réalisé dans l'unité de traitement centrale.
